# EUROPEAN PATENT SPECIFICATION

(11) **EP 0 367 603 B1**
(45) Date of publication and mention of the grant of the patent: **21.09.1994**
(21) Application number: 89311351.4
(22) Date of filing: 02.11.1989
(51) Int. Cl.: B65D 75/32, B65D 43/04

(54) **Food package containing a reclosable means**
Verpackung für Lebensmittel mit Einrichtung zum Wiederverschliessen
Emballage pour aliments comprenant des moyens de fermeture

(30) Priority: 03.11.1988 US 266733
(43) Date of publication of application: 09.05.1990
(60) Divisional application: 93118786.8
(73) Proprietor: OSCAR MAYER FOODS CORPORATION, Madison Wisconsin 53707 (US)
(72) Inventor: Hustad, Gerald Orton, McFarland Wisconsin 53558 (US)
(74) Representative: Eyles, Christopher Thomas

(56) References cited:
- EP-A- 0 222 558
- US-A- 3 460 711
- US-A- 4 016 972

## Description

This invention is concerned with a food package having a base, a body member, a peeling seal for hermetically sealing the base to the cover and snap-locking means contained in the base and cover for reclosing the package after it has been opened in providing an audible snap as the package is reclosed.

Food packages have been described in the past. For example, EP-A-0222558 discloses a food package according to the pre-characterising part of claim 1 comprising a base member having a peripheral flange, a side wall and a raised panel portion; a body member having a peripheral flange, the body member cooperating with the base member to form a cavity to receive a food product, with said body member having a depending side wall engaging the base member side wall in telescoping arrangement, and the body member having a top panel; peelable sealing means to provide hermetic sealing of the base member peripheral flange to the body member peripheral flange after the food product is filled into the cavity; and locking means contained within the peelable sealing means in the base member side wall and in the body member side wall for snap locking the base member to the body member, having been formed after the cavity has been formed, filled and sealed. In US-A-3498018 a food package is described wherein the food is sealed inside the package having a body and top member. The food is formed under vacuum and with mechanical pressure thereby forming the food to the package and is hermetically sealed. These types of packages and methods for forming are further described in US-A-4411122; US-A-4577757; and US-A-688,369. Attempts to improve these patents are further described in US-A-4498588 and US-A-4498589. Various improvements are described, for instance in US-A-4498588, ridges 34, grooves 36, and fig. 3 are described in an attempt to provide a interlocking engagement. These elements, however, have not proven to be satisfactory in producing a suitable audible snap in reclosing the package. Other means of incorporating snap actions into packages are described in U.S. Patents 3,672,536 and 3,734,276. It is submitted that these two patents, however, do not describe packages wherein the packaged foods are formed to the package with vacuum and mechanical pressure.

Thus, there remains in the art a need for a package that is easily openable and also recloses in a positive manner in providing an audible sound signifying to the consumer that the package has been reclosed, particularly with packages where the food is pressed to conform to the container.

According to the invention there is provided a food package comprising:
(a) a thermoformed base member having a peripheral flange, a side wall and a raised panel portion;
(b) a thermoformed body member having a peripheral flange, said body member cooperating with the base member to form a cavity to receive a food product, with said body member having a depending side wall engaging said base member side wall in telescoping arrangement, and said body member having a top panel;
(c) peelable sealing means to provide hermetic sealing of the base member peripheral flange to the body member peripheral flange after the food product is filled into the cavity; and
(d) locking means contained within the peelable sealing means in the base member side wall and in the body member side wall for snap locking the base member to the body member, having been formed after said cavity has been formed, filled and sealed;
characterised in that said locking means is comprised of a plurality of locking projections which are formed by crimping, which are at least 1/16 of an inch (at least 1.59 mm) in height, which are spaced from each other, which are positioned both (a) in said base member side wall and in said body member side wall and (b) in said base member flange and in said body member flange and which project in a direction away from said food product cavity and generally perpendicular to said body member depending side wall to provide for a friction interference fit, said locking means further including a sidewall of both of said locking projections in the body member side wall and in the base member side wall, said sidewalls of said locking projections each having a crease which is generally parallel to said peripheral flanges and which is positioned substantially midway along said height of the locking projection, said sidewalls of said locking projections being pairs of sidewalls formed simultaneously in both the body member and the base member to provide sidewall pairs which matingly interengage one another for audibly snap locking the base member to the body member; and
that an adhesive is applied generally around the periphery of the cavity and through said locking projections thereby providing an adhesive pattern which conforms to the shape of the locking projections.

Non-limiting embodiments are now described by way of example only, in the accompanying drawings, wherein:

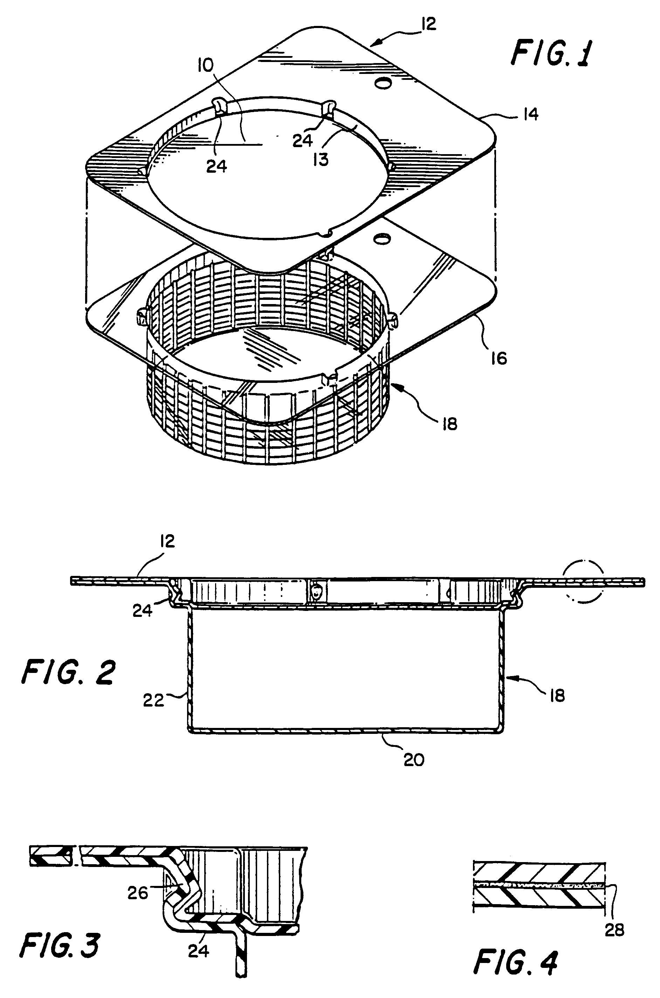

Figure 1 is a perspective view of a package according to the present invention,
Figure 2 is a side view of the package,
Figure 3 and Figure 4 are segments of the package,

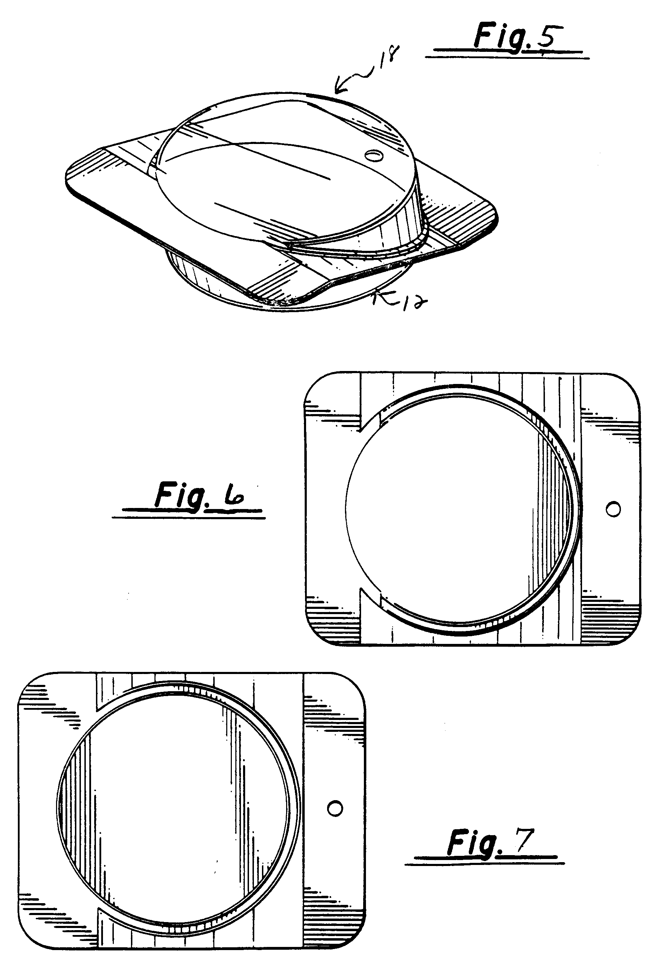

Figure 5 is a perspective view of a bias package, and

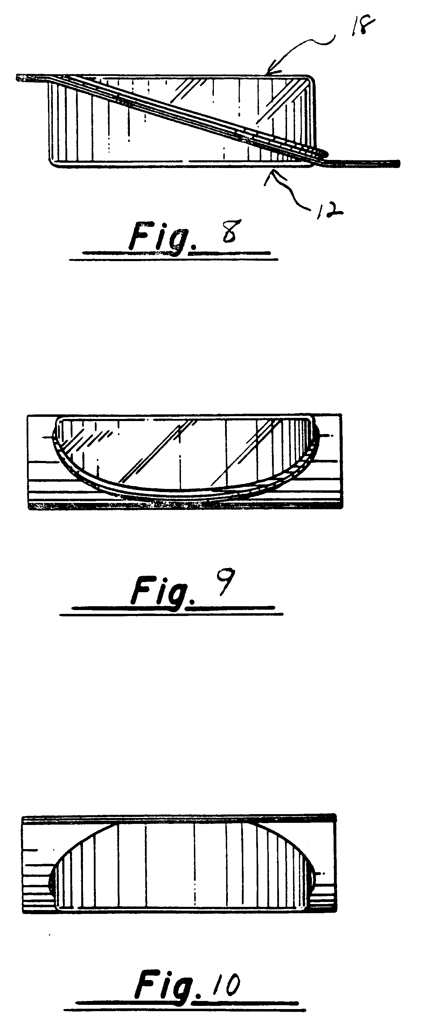

Figures 6, 7, 8, 9 and 10 are a front view, rear view, side view, top view and bottom view respectively of the Figure 5 package.

### SUMMARY OF THE INVENTION

This invention pertains to a food package having a base member with a peripheral flange, a side wall and a raised panel portion. A body member is also provided having a peripheral flange, a side wall and a top panel. Said body member cooperates with the base member to form a cavity to receive a food product when said base side wall engages said body member side wall in telescoping arrangement of the package so that the food may be compressed. Suitable packaged foods include but are not limited to sliced luncheon meats and cheeses. A peelable sealing means is also provided to hermetically seal the body member flange to the base flange. A snap-locking means is also provided in the base side wall and in the body member side wall to provide an audible snap-locking action when the base engages the body member.

U.S. Patents 3,498,018; 4,411,122; 4,577,757; and 4,688,369 describe a method of forming a vacuumized, hermetically sealed package, as shown in the figures, characterized by a pre-determined quantity of a product which is deformable and is arranged in a form of an upright mass on a raised panel (10) portion of a base member (12). The base member has a side wall (13) and peripheral flange (14), hermetically sealed to a corresponding peripheral flange (16) of a body member (18). Preferably, the body member is made of a semi-ridged, pre-formed plastic. The body member has a top panel (20) for engaging the upper end of the product and a depending side wall (22) for engaging the side walls of said product. The top panel is joined to said side wall by a hinge forming portion (24). The bottom edges of the body member side wall are in telescoping relation with the portion of the base at the peripheral edges of said raised panel portion. To fill the package, the body member is placed in an inverted position and a sufficient quantity of product is placed in said body member to substantially fill the body member when the package is completed. The base member is positioned on the mouth of the body member so that the product panel disposes in a telescopic way into the body member and engages the product. The flange margins of the base member overlay the corresponding margins of the body member. Mechanical pressure is applied inwardly on the outside surface of the raised panel portion. The area defined by the bottom edges of the body side walls is sufficient to force the product into close contact with the interior surfaces of the base and body members to shape the product to conform to the shape of the interior surface and to substantially completely fill the space available between the same and product while vacuumizing the assembly and the sealing of the package by hermetic means.

According to the present invention, projections (26) in the base sidewall and in the body member sidewall are formed. The projections may consist of a number of shapes such as a partial circle, and are 1/16 of an inch (1.59 mm) or more, 1/8 of an inch (3.18 mm) preferred and 1/4 of an inch (6.35 mm) more preferred in height. Projections (26) are formed by crimping after filling and sealing of the package. Post-thermoforming crimping of the projections cause an audible snap when the body member and base are pressed together. A glue pattern, of adhesive (28) is applied, progresses around the periphery of the package and conforms to the shape of the tab projections. A minimum of one tab projection and as many as eight or more projections may be formed to achieve a desired reclosable locking action. Other embodiments to assist reclosing are a permanent glue or a heat seal along the base in a score line adjacent to a bottom glue line to function as a hinge. A hinge may also be provided by adhering tape to the base (12) and bubble flange (16) at either package end. Thermoform matching lugs might be provided on the side walls of the base and body member to enhance resealing after the package is opened. When this invention is employed, reclosability and the ability to stay closed is achieved at a low cost by providing one or more points of friction interaction within the sealed area of the package. An audible snap sound is also provided which enhances the perception of freshness preservation once the package is opened. This invention can be applied to round, square or other shaped packages. Also, the projections are visible to the consumer and a pleasing appearance is obtained. To achieve an easy opening, high molecular weight polymer adhesives which are peelable/resealable may be used or easy peel multi-layer rigid films that are heat sealable may be used. Accordingly, features of this invention are thermoforming projections in the body member and base that are part of the side walls that friction fit through a pinching action (top to bottom) with a post thermoforming gripping action when the base and body member are pressed together. An audible reclosability of the package base and body member is achieved within the sealed area of the package. Crimping of projections may occur from the side and occurs after the package is filled and sealed. Crimping may also occur at room temperature or heat may be applied to the surface of a crimped area and/or imparted by a crimping device. In one embodiment of this invention, as shown in the Figures, an example of 5 projections which are a semi-circle is shown. The thickness of the body member is approximately 13 mil. (0.33 mm) and the thickness of the base is approximately 12 mil. (0.30 mm). The body members composition may be Barex 210 (a polyacrylonitrile film), PET (polyethylene terephthalate) or PVC (polyvinyl chloride). The base composition suitably is Barex 210 (a polyacrylonitrile film), PVC, saranex (a polyethylene-saran coextrusion film) laminated to Barex 210 (a polyacrylonitrile film), PVC (polyvinyl chloride), or polystyrene.

## Claims

1. A food package comprising:
(a) a thermoformed base member (12) having a peripheral flange (14), a side wall (13) and a raised panel portion (10);
(b) a thermoformed body member (18) having a peripheral flange (16), said body member cooperating with the base member (12) to form a cavity to receive a food product, with said body member (18) having a depending side wall (22) engaging said base member side wall in telescoping arrangement, and said body member (18) having a top panel (20);
(c) peelable sealing means to provide hermetic sealing of the base member peripheral flange (14) to the body member peripheral flange (16) after the food product is filled into the cavity; and
(d) locking means contained within the peelable sealing means in the base member side wall (13) and in the body member side wall (24) for snap locking the base member (12) to the body member (18), having been formed after said cavity has been formed, filled and sealed;
characterised in that said locking means is comprised of a plurality of locking projections (26) which are formed by crimping, which are at least 1/16 of an inch (at least 1.59 mm) in height, which are spaced from each other, which are positioned both (a) in said base member side wall (13) and in said body member side wall (22) and (b) in said base member flange (14) and in said body member flange (16) and which project in a direction away from said food product cavity and generally perpendicular to said body member depending side wall (22) to provide for a friction interference fit, said locking means further including a sidewall of both of said locking projections (26) in the body member side wall (22) and in the base member side wall (13), said sidewalls of said locking projections (26) each having a crease which is generally parallel to said peripheral flanges and which is positioned substantially mid-way along said height of the locking projection (26), said sidewalls of said locking projections (26) being pairs of sidewalls formed simultaneously in both the body member (18) and the base member (12) to provide sidewall pairs which matingly interengage one another for audibly snap locking the base member (12) to the body member (18); and
that an adhesive is applied generally around the periphery of the cavity and through said locking projections (26) thereby providing an adhesive pattern (28) which conforms to the shape of the locking projections (26).

2. A package according to claim 1, characterised in that it further includes hinge means (24) for securing respective ends of the base member (12) and the body member (18) together.

## Patentansprüche

1. Lebensmittelpackung, umfassend:
(a) ein durch Wärmeformen geformtes Basiselement (12) mit einem Umfangsflansch (14), einer Seitenwand (13) und einem erhöhten Feldteil (10);
(b) ein durch Wärmeformen geformtes Körperelement (18) mit einem Umfangsflansch (16), wobei das besagte Körperelement mit dem Basiselement (12) zusammenwirkt, um einen Hohlraum zur Aufnahme eines Lebensmittelerzeugnisses zu bilden, wobei das besagte Körperelement (18) eine abhängige Seitenwand (22) aufweist, die in ineinandergeschobener Anordnung mit der Seitenwand des besagten Basiselements im Eingriff steht, und wobei das besagte Körperelement (18) ein oberes Feld (20) aufweist;
(c) eine abziehbare Abdichteinrichtung, um für eine luftdichte Versiegelung des Umfangsflanschs (14) des Basiselements mit dem Umfangsflansch (16) des Körperelements zu sorgen, nachdem das Lebensmittelerzeugnis in den Hohlraum gefüllt ist; und
(d) eine innerhalb der abziehbaren Abdichteinrichtung in der Seitenwand (13) des Basiselements und in der Seitenwand (24) des Körperelements enthaltene Verschlußvorrichtung, um das Basiselement (12) mit dem Körperelement (18) zu verrasten, welche gebildet worden ist, nachdem der besagte Hohlraum geformt, gefüllt und versiegelt worden ist;
dadurch gekennzeichnet, daß die besagte Verschlußvorrichtung eine Mehrzahl von Verschlußvorsprüngen (26) umfaßt, die durch Eindrücken (crimping) gebildet sind, die mindestens 1/16 eines Inchs (mindestens 1,59 mm) hoch sind, die einen Abstand voneinander aufweisen, die sowohl (a) in der besagten Seitenwand (13) des Basiselements und in der besagten Seitenwand (22) des Körperelements und (b) im besagten Flansch (14) des Basiselements und im besagten Flansch (16) des Körperelements positioniert sind, und die in einer Richtung weg von dem besagten Lebensmittelerzeugnishohlraum und allgemein senkrecht zu der besagten abhängigen Seitenwand (22) des besagten Körperelements überstehen, um einen Reibungs-Preßsitz bereitzustellen, wobei die besagte Verschlußvorrichtung weiter eine Seitenwand sowohl der besagten Verschlußvorsprünge (26) in der Seitenwand (22) des Körperelements und in der Seitenwand (13) des Basiselements einschließt, wobei die besagten Seitenwände der besagten Verschlußvorsprünge (26) jeweils eine Falte aufweisen, die allgemein parallel zu den besagten Umfangsflanschen ist, und die im wesentlichen auf halbem Weg entlang der besagten Höhe des Verschlußvorsprungs (26) positioniert ist, wobei die besagten Seitenwände der besagten Verschlußvorsprünge (26) Paare von Seitenwänden sind, die gleichzeitig sowohl im Körperelement (18) und im Basiselement (12) gebildet werden, um Seitenwandpaare bereitzustellen, die zusammenpassend miteinander in Eingriff treten, um das Basiselement (12) hörbar mit dem Körperelement (18) zu verrasten; und
daß ein Kleber allgemein um den Umfang des Hohlraums herum und durch die besagten Verschlußvorsprünge (26) aufgetragen ist, um dadurch ein Klebermuster (28) zu schaffen, das mit der Form der Verschlußvorsprünge (26) übereinstimmt.

2. Packung nach Anspruch 1, dadurch gekennzeichnet, daß sie weiter eine Scharniereinrichtung (24) einschließt, um jeweilige Enden des Basiselements (12) und des Körperelements (18) miteinander zu verbinden.

## Revendications

1. Emballage pour aliments comprenant :
(a) un organe de base (12) thermoformé présentant un rebord périphérique (14), une paroi latérale (13) et une partie en panneau (10) surélevée;
(b) un organe de corps (18) thermoformé présentant un rebord périphérique (16), ledit organe de corps coopérant avec l'organe de base (12) afin de former une cavité destinée à recevoir un produit alimentaire, ledit organe de corps (18) présentant une paroi latérale (22) dépendante, en contact avec ladite paroi latérale d'organe de base selon un agencement télescopique, et ledit organe de corps (18) présentant un panneau supérieur (20);
(c) un moyen de scellage pelable, servant à réaliser une fermeture hermétique du rebord périphérique d'organe de base (14) sur le rebord périphérique d'organe de corps (16), après que le produit alimentaire a été placé dans la cavité; et
(d) un moyen de verrouillage contenu dans le moyen de scellage pelable, dans la paroi latérale d'organe de base (13) et dans la paroi latérale d'organe de corps (24), afin de verrouiller par encliquetage l'organe de base (12) sur l'organe de corps (18), ayant été formé après que ladite cavité a été formée, remplie et scellée;
caractérisé en ce que ledit moyen de verrouillage est constitué d'une pluralité de saillies de verrouillage (26) qui sont formées par sertissage, qui présentent une hauteur au moins égale à 1/16 de pouce (1,59 mm), qui sont espacées les unes des autres, qui sont disposées à la fois (a) dans ladite paroi latérale d'organe de base (13) et dans ladite paroi latérale d'organe de corps (22) et (b) dans ledit rebord d'organe de base (14) et dans ledit rebord d'organe de corps (16) qui font saillie dans une direction allant en s'éloignant de ladite cavité de produit alimentaire et globalement perpendiculaire à ladite paroi latérale dépendante d'organe de corps (22), afin de permettre une insertion à friction avec contact, ledit moyen de verrouillage comprenant en outre une paroi latérale desdites deux saillies de verrouillage (26) situées dans la paroi latérale d'organe de corps (22) et dans la paroi latérale d'organe de base (13), lesdites parois latérales desdites saillies de verrouillage (26) présentant chacune un pli qui est globalement parallèle auxdits rebords périphériques et qui est disposé pratiquement à mi-chemin sur ladite hauteur de la saillie de verrouillage (26), lesdites parois latérales desdites saillies de verrouillage (26) se présentant sous forme de couples de parois latérales formées simultanément à la fois dans l'organe de corps (18) et dans l'organe de base (12), afin d'obtenir des couples de parois latérales qui s'adaptent entre elles, en vue de verrouiller par encliquetage audible l'organe de base (12) par rapport à l'organe de corps (18); et
en ce qu'un adhésif est appliqué globalement autour de la périphérie de la cavité et' dans lesdites saillies de verrouillage (26), de manière à obtenir un motif adhésif (28) qui se conforme à la forme des saillies de verrouillage (26).

2. Emballage selon la revendication 1, caractérisé en ce qu'il comprend en outre un moyen d'articulation (24) servant à fixer ensemble les extrémités respectives de l'organe de base (12) et de l'organe de corps (18).
